# FASCICULE DE BREVET EUROPEEN

(11) **EP 2 158 798 B1**
(45) Date de publication et mention de la délivrance du brevet: **26.08.2015**
(21) Numéro de dépôt: 09168650.1
(22) Date de dépôt: 26.08.2009
(51) Int. Cl.: A01B 3/46

(54) **Charrue portée**
Anbaupflug mit verbesserter Stützradaufhängung
Mounted plough with improved arm for wheel

(30) Priorité: 27.08.2008 FR 0855746
(43) Date de publication de la demande: 03.03.2010
(73) Titulaire: Kuhn-Huard S.A., 44142 Châteaubriant (FR)
(72) Inventeur: Barge, David, 42820 Ambierle (FR); Geinguene, Fabien, 44170 Marsac sur Don (FR); Herault, Vincent, 44470 Mauves sur Loire (FR)
(74) Mandataire: Esch, Esther Evelyne

(56) Documents cités:
- EP-A- 0 839 442
- EP-A- 1 449 418
- DE-A1- 2 937 196
- FR-A- 2 627 343

## Description

La présente invention se rapporte au domaine technique général du machinisme agricole. Elle concerne plus particulièrement une charrue portée comprenant un avant-train et un arrière-train, l'arrière-train comportant un bâti équipé de corps de labour et d'une roue de régulation, ladite roue de régulation étant montée sur ledit bâti au moyen d'un bras de roue.

Les charrues portées connues sont équipées d'au moins une roue de jauge ou de régulation. Cette roue a pour fonction d'assurer le réglage de la profondeur de travail de la charrue, notamment des corps de labour, en complément du système d'attelage du tracteur. Ce réglage est réalisé d'une part via le système d'attelage du tracteur et d'autre part via la roue de régulation. Le système d'attelage du tracteur permet de positionner l'avant-train de la charrue à une certaine hauteur du sol grâce aux barres inférieures du tracteur ce qui défini la profondeur de travail des corps de labour avant. La roue de régulation permet, quant à elle, de définir la profondeur de travail des corps de labour arrière. La roue de régulation est fixée sur la partie arrière de l'arrière-train. La roue permet de compenser les efforts de flexion du bâti dus aux efforts de la terre sur les corps de labour, c'est pourquoi elle roule sur le sol non labouré. Il est bien connu que la position privilégiée pour la roue de régulation est une position arrière. Dans cette position arrière, la roue apporte une stabilité optimale pour la charrue ainsi qu'un guidage idéal de la profondeur de travail pour les corps de labour arrière.

Cette implantation arrière de la roue de régulation entraîne un débordement de cette dernière par rapport au bâti de la charrue. La roue s'étend au-delà de l'encombrement en largeur du bâti lors du travail. En raison de ce débordement, une bande de terre reste non labourée lors du dernier passage dans un champ. La largeur de cette bande non labourée correspond à la largeur du débordement de la roue. Il n'est donc pas possible de labourer au plus près des limites du champ lorsque ce dernier est bordé par une clôture, un fossé ou par un champ voisin comportant encore des cultures. Cet inconvénient se présente à chaque fois que la charrue se trouve proche d'une bordure de champ qu'elle ne peut pas franchir. Les pertes de surface cultivée sont particulièrement sensibles dans le cas de champs de faibles dimensions. La position débordante de la roue limite donc la surface labourée et par conséquent la production du champ.

Pour augmenter la surface à labourer, il est d'usage de retourner le bras de roue portant la roue de régulation. Pour cela, il faut désolidariser le bras de roue du bâti et le faire pivoter de 180° par rapport à l'horizontal. En pratique, cette opération n'est faite que très rarement car il faut soulever le bras de roue avec la roue de régulation et les faire pivoter par rapport à l'horizontal. Après le retournement, il faut à nouveau fixer le bras de roue sur le bâti. Cette opération est pénible. Par ailleurs on constate que lorsque le bras de roue est retourné, le débordement de la roue n'est pas totalement annulé, il est seulement réduit.

La présente invention a pour but de remédier aux inconvénients précités et de proposer une charrue portée pouvant travailler au plus près des limites d'un champ.

A cet effet, une importante caractéristique de l'invention consiste en ce que ledit bras de roue comporte des moyens pour déplacer ladite roue de régulation le long du bâti et que lesdits moyens sont constitués d'au moins une articulation d'axe sensiblement vertical et d'au moins une bielle. Grâce aux moyens la roue de régulation est disposée de manière à ne pas déborder par rapport à l'encombrement en largeur du bâti. Ainsi lors du labour, la charrue pourra travailler au plus près des limites d'un champ. La roue ne réduit pas l'activité de la charrue. Les moyens permettent à la roue de régulation de passer facilement et rapidement d'une position normale de travail à une position non-débordante, et inversement.

D'autres caractéristiques et avantages de l'invention se dégageront des revendications et de la description qui vont suivre des exemples de réalisation non limitatifs de l'invention avec référence aux dessins annexés dans lesquels :
- la **figure** 1 représente une vue de dessus de la charrue selon l'invention avec la roue de régulation dans une position normale de travail,
- la figure 2 représente, à plus grande échelle, la roue de régulation de la figure 1 dans une autre position de travail,
- la figure 3 représente un autre exemple de réalisation de la roue de régulation dans une position normale de travail,
- la figure 4 représente la roue de régulation de la figure 3 dans une autre position de travail.

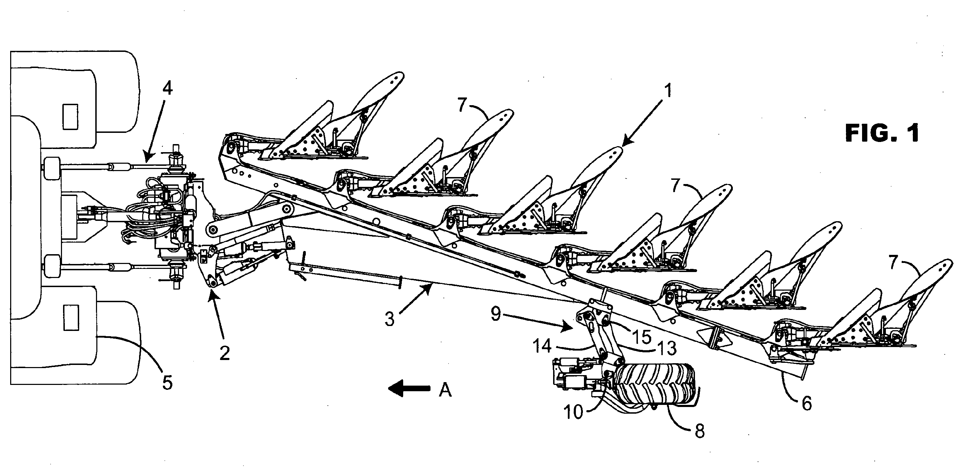

Telle qu'elle est représentée sur la figure 1, la machine selon l'invention est une charrue portée. La charrue (1) comporte un avant-train (2) et un arrière-train (3). L'avant-train (2) est la partie avant de la charrue reliée au système d'attelage (4) du tracteur (5). Le système d'attelage (4) est un attelage trois points. Ainsi accouplée, la charrue (1) est déplacée dans une direction d'avance indiquée par la flèche (A) au travail comme au transport par l'intermédiaire du tracteur (5). Dans la suite de la description, les notions "avant" et "arrière", "devant" et "derrière" sont définies par rapport au sens d'avance (A) et les notions "droite" et "gauche" sont définies en regardant la charrue de l'arrière dans ledit sens d'avance (A). L'avant-train (2) est encore destiné à porter l'arrière-train (3) de la charrue (1).

L'arrière-train (3) est globalement composé d'un bâti (6) et de corps de labour (7). Le bâti (6) est l'ensemble relié à favant-train (2). Il supporte les ages et les corps de labour (7). Il est constitué d'une poutre de section carrée ou rectangulaire, qui est renforcée localement pour résister aux efforts de torsion lors du travail et aux efforts de flexion durant le transport. Dans l'exemple de réalisation la charrue est réversible, elle comporte deux groupes de six corps de labour (7). L'arrière-train (3) est monté tournant pour placer en alternance les groupes de corps en position de travail selon la situation à droite ou à gauche par rapport à la direction d'avance (A) du tracteur (5). Le passage d'une position de travail à une autre est appelé retournement.

Le bâti (6) porte aussi une roue de régulation (8). Cette roue (8) permet de contrôler la profondeur de travail des corps (7) en complément du système d'attelage (4) du tracteur (5). Ainsi la profondeur de pénétration des six corps de labour (7) dans le sol est identique. Dans le cas de cette charrue portée, l'orientation de la roue (8) est indépendante de l'orientation des corps de labour (7). Lorsque la charrue (1) travaille, la roue de régulation (8) roule sur le sol pas encore labouré. Pendant le retournement, la roue (8) bascule autour d'un axe sensiblement horizontal et perpendiculaire à la direction d'avance (A) pour régler la profondeur de travail dans l'autre position de travail. La roue de régulation (8) est montée latéralement sur le bâti (6) au moyen d'un bras de roue (9). Elle est fixée sur la moitié arrière du bâti (6). Le bras de roue (9) comporte d'un côté une chape (11) et l'autre côté une embase (12). La roue de régulation (8) est liée à la chape (11) via une articulation (10) d'axe sensiblement vertical et perpendiculaire à la direction d'avance (A) au travail. L'articulation verticale (10) permet à la roue de régulation (8) de s'orienter par rapport à la direction d'avance (A) de la charrue (1). Cette articulation verticale (10) permet également l'adaptation à la largeur de coupe des corps (7). A son autre extrémité, le bras de roue (9) est lié au bâti (6) par l'intermédiaire de l'embase (12). L'embase (12) peut être déplacée le long du bâti (6). Le montage le long du bâti (6) résulte du choix du meilleur compromis entre le report de charge et le débordement de la roue (8). Le débordement est défini par rapport à l'extrémité arrière du bâti (6). En position normale de travail, comme représenté sur la figure 1, la roue de régulation (8) déborde par rapport aux limites du bâti (6). En effet, si on considère le gabarit en largeur du bâti (6), en vue de dessus, la roue (8) s'étend au-delà de ce gabarit. Le débordement de la roue (8) devient un inconvénient lors du dernier passage en bordure d'un champ.

Selon une caractéristique importante de l'invention, le bras de roue (9) comporte des moyens pour déplacer la roue de régulation (8) le long du bâti (6). Grâce à ces moyens, la roue (8) est déplacée le long du bâti (6) pour réduire son débordement par rapport au bâti (6) sans modification de la position d'accrochage du bras de roue (9) sur le bâti (6). Ces moyens permettent à la roue de régulation (8) d'être disposée sensiblement dans l'encombrement en largeur du bâti (6) dans au moins une position de travail sans nécessiter de démontage préalable du bras de roue (9). Ces moyens permettent un pivotement vers l'avant de la roue de régulation (8) compte tenu de la direction d'avance (A). D'une manière particulièrement avantageuse, la roue (8) s'étend entièrement dans l'encombrement en largeur du bâti (6).

Selon une autre caractéristique importante de l'invention, le bras de roue (9) présente au moins une articulation supplémentaire (15) d'axe sensiblement vertical. Ledit bras de roue (9) articulé permettant à ladite roue de régulation d'être disposée dans l'encombrement en largeur du bâti dans au moins une position de travail. L'articulation supplémentaire (15) présente un axe sensiblement transversal à la direction d'avance (A). L'articulation supplémentaire (15) est sensiblement parallèle à l'articulation verticale (10). Le bras de roue (9) articulé permet à la roue (8) de passer facilement et rapidement d'une position normale de travail à une position non-débordante, et inversement par pivotement.

La position non-débordante est atteinte grâce au pivotement du bras de roue (9) autour de l'articulation supplémentaire (15). Lorsque la roue de régulation (8) passe de la position normale à la position non-débordante de travail, elle est avancée par rapport à la direction d'avance (A). Dans chacune des positions de travail, normales ou non-débordantes, la roue de régulation (8) est immobilisée par rapport au bâti (6). La position de la deuxième bielle (14) est immobilisée par une broche (19) ou tout autre moyen connu. La broche (19) évite un déplacement intempestif du bras de roue (9) lors du labour. En fin de champ, la charrue (1) est soulevée pour le retournement des corps de labour (7). C'est dans cette position relevée que le pivotement de la roue de régulation (8) est effectué pour passer d'une position de travail à l'autre.

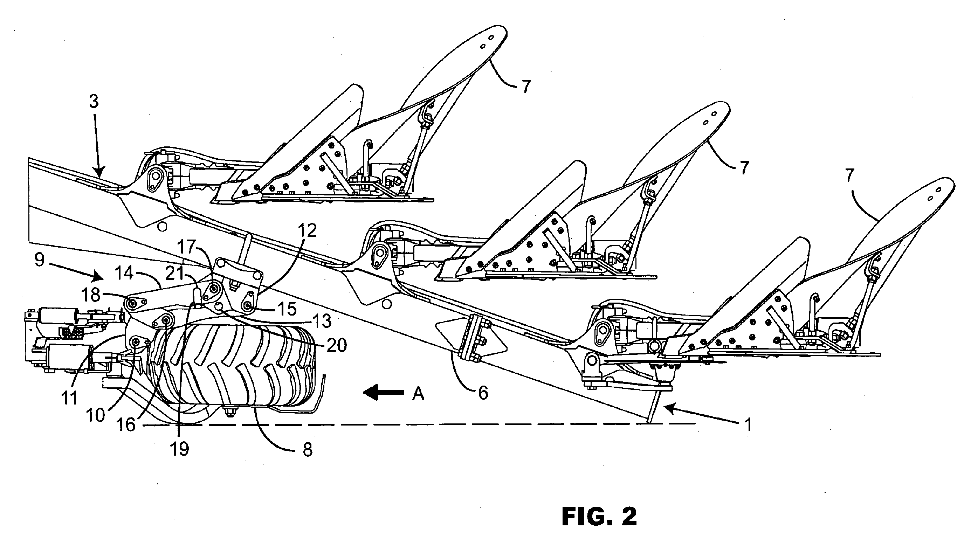

La figure 2 illustre la roue de régulation (8) configurée entre autres, pour le dernier passage en bordure d'un champ. Seuls les trois derniers corps de labour (7) sont représentés sur la figure 2. Une ligne sensiblement parallèle à la direction d'avance (A) a été tracée en traits discontinus. Cette ligne passe par le point extrême arrière du bâti (6). Dans cette configuration, la roue de régulation (8) ne déborde pas au-delà du bâti (6) de la charrue (1). Cette configuration est appelée position non-débordante de travail.

A la lumière des figures 1 et 2, le bras de roue (9) relie la roue de régulation (8) au bâti (6). Le bras de roue (9) présente au moins une articulation supplémentaire d'axe sensiblement vertical et transversal à la direction d'avance (A). Le bras de roue (9) est composé d'une première bielle (13) et d'une deuxième bielle (14). La première bielle (13) est reliée d'une part au bâti (6) via une première articulation (15) et d'autre part à la roue (8) via une deuxième articulation (16). Cette première articulation (15) correspond à l'articulation supplémentaire. Les articulations (15, 16) présentent chacune un axe sensiblement vertical et perpendiculaire à la direction d'avance (A). La deuxième bielle (14) est également reliée au bâti (6) via une troisième articulation (17) et à la roue (8) via une quatrième articulation (18). Les articulations (17, 18) présentent chacune un axe sensiblement vertical et perpendiculaire à la direction d'avance (A). Les articulations (15, 17) sont reliées au bâti (6) par l'intermédiaire de l'embase (12) et les articulations (16, 18) sont reliées à la roue (8) par l'intermédiaire de la chape (11). Le bras de roue (9) présente ainsi quatre articulations supplémentaires (15, 16, 17, 18). La première bielle (13) et la deuxième bielle (14) sont parallèles. La première articulation (15) s'étend sensiblement derrière la troisième articulation (17) et la deuxième articulation (16) s'étend sensiblement derrière la quatrième articulation (18) compte tenu de la direction d'avance (A). Les articulations (15, 16, 17, 18) forment un quadrilatère déformable. Le quadrilatère est de préférence un parallélogramme. L'utilisation d'une cinématique de quadrilatère permet de combiner une translation et une rotation pour le bras de roue (9).

Sur les figures 1 et 2, la broche (19) permet d'immobiliser la deuxième bielle (14) par rapport au bâti (6). L'embase (12) qui est montée sur le bâti (6) comporte des trous de fixation à cet effet. Un premier trou (20) fixe la position normale de travail (figure 1) et un deuxième trou (21) fixe la position non-débordante (figure 2). Les trous (20, 21) sont disposés au voisinage de la troisième articulation (17). Le premier trou (20) est disposé en arrière du deuxième trou (21) compte tenu de la direction d'avance (A). Le passage de la position normale à la position non-débordante, et inversement, est effectué manuellement. La broche (19) est retirée puis est remise manuellement après que le bras de roue (9) a été pivoté.

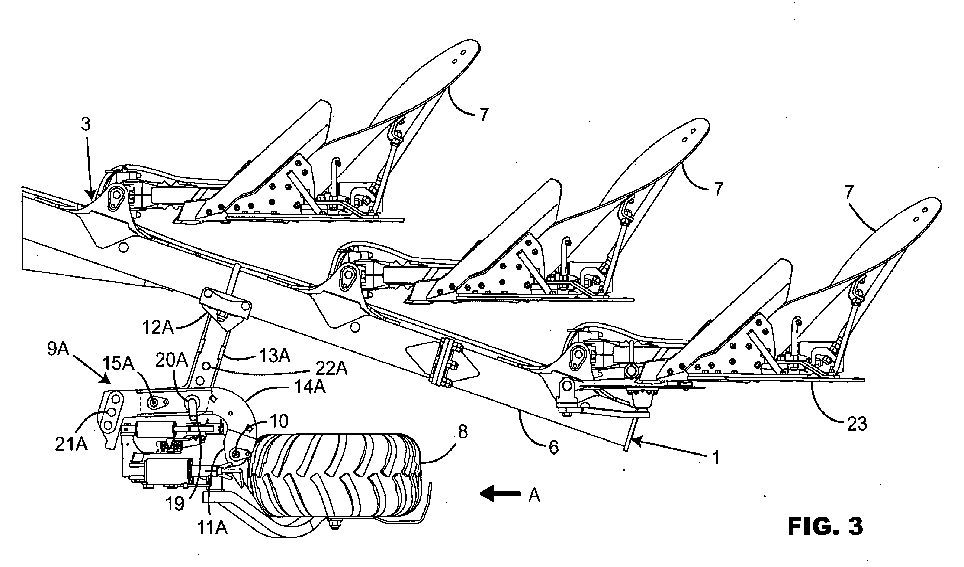

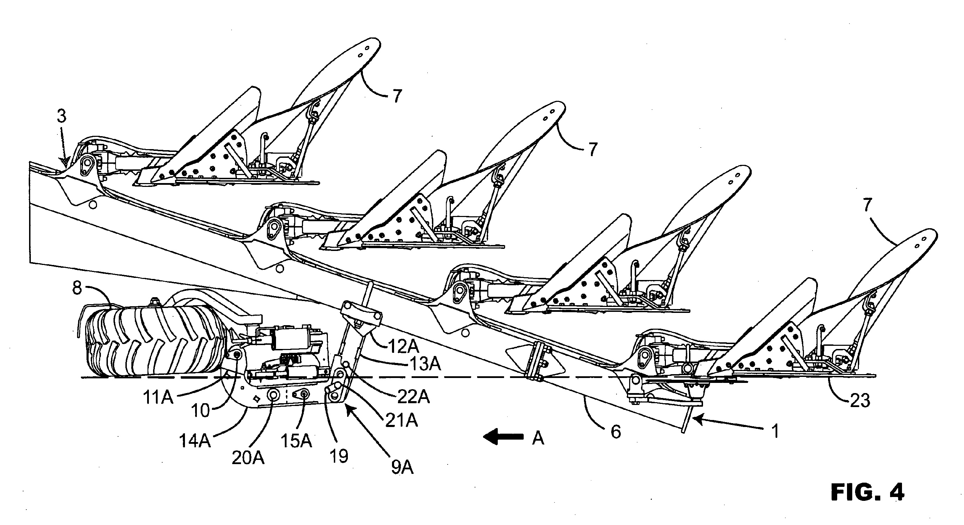

Les figures 3 et 4 illustrent une deuxième forme de réalisation d'un bras de roue. Ce bras de roue (9A) comporte des éléments qui sont comparables à des éléments du bras de roue (9) décrit précédemment. Ces éléments seront affectés du même numéro de repère suivi de la lettre A. Seuls les derniers corps de labour (7) ont été représentés.

La figure 3 représente la position normale de travail de la roue de régulation (8) alors que la figure 4 représente la position non-débordante pour le dernier passage de la charrue en limite d'un champ. A la lumière des figures 3 et 4, le bras de roue (9A) comporte aussi des moyens pour déplacer la roue (8) le long du bâti (6). Le bras de roue (9A) présente une articulation supplémentaire (15A) d'axe sensiblement vertical et transversal à la direction d'avance (A). Il est composé d'une première bielle (13A) et d'une deuxième bielle (14A). La première bielle (13A) est reliée au bâti (6) via l'embase (12). L'orientation de la première bielle (13A) par rapport au bâti (6) est fixe mais elle peut être déplacée le long du bâti (6). La première bielle (13A) présente une forme de "L" couché. La grande barre étant reliée au bâti (6) et l'extrémité libre de la petite barre portant l'articulation supplémentaire (15A). La première bielle (13A) présente au moins une ouverture destinée à recevoir la broche (19).

La deuxième bielle (14A) présente une forme de "C". Une des extrémités est constituée de la chape (11A) et porte la roue de régulation (8) avec l'articulation verticale (10). La deuxième bielle (14A) est liée à la première bielle (13A) au moyen de l'articulation supplémentaire (15A). L'articulation supplémentaire (15A) est disposée sensiblement au voisinage du plan médian de la deuxième bielle (14A), elle est avantageusement décalée du côté opposée de la chape (11A). La deuxième bielle (14A) est destinée à pivoter par rapport à la première bielle (13A) autour de l'articulation supplémentaire (15A) pour passer de la position normale à la position non-débordante, et inversement. La broche (19) permet de bloquer chacune des positions.

Dans la position normale représentée à la figure 3, la broche (19) bloque la rotation de la deuxième bielle (14A) au moyen d'un premier trou (20A). Le premier trou (20A) est ménagé dans la deuxième bielle (14A) sensiblement au voisinage de son plan médian, de préférence il est décalé du côté de la chape (11A). La figure 4 représente la position non-débordante de la roue (8). Dans cette position, la broche (19) bloque la rotation de la deuxième bielle (14A) au moyen d'un deuxième trou (21A). Le deuxième trou (21A) est ménagé dans la deuxième bielle (14A) au niveau de l'extrémité libre. Sur la figure 4, on remarque que la roue de régulation (8) s'étend sensiblement à l'avant dudit bras de roue (9A) compte tenu de la direction d'avance (A). Pour éviter que la roue de régulation (8) entre en interférence avec le bâti (6), la première bielle (13A) comporte une butée (22A) contre laquelle vient s'appuyer l'extrémité libre de la deuxième bielle (14A).

Sur la figure 4, on peut voir que la roue de régulation (8) ne déborde pas par rapport au bâti (6). La roue (8) ne déborde pas non plus par rapport au contresep (23) du dernier corps. Le contresep (23) ayant pour rôle d'assurer le guidage du corps de labour (7), il est sensiblement parallèle à la direction d'avance (A). Pour cela, il glisse le long de la muraille et s'appuie contre la muraille lorsque la charrue avance et découpe la terre. La muraille étant la partie verticale formée par le corps de labour (7) qui subsiste après le passage de la charrue. Une ligne sensiblement parallèle à la direction d'avance (A) a été tracée en traits discontinus. Cette ligne passe par le contresep (23) du dernier corps (7). Cette position non-débordante par rapport au contresep (23) du dernier corps est particulièrement intéressante lorsque le champ est bordé par un fossé ou un autre champ car le labour peut alors être réalisé jusqu'au plus près des limites.

D'une manière alternative, le passage de la position normale à la position non-débordante de la roue de régulation (8) est pilotable depuis le tracteur.

Selon un autre exemple de réalisation non représenté, la roue de régulation (8) est montée à l'arrière du bâti (6) via un bras de roue correspondant. Le bras de roue comprendra alors des dimensions et formes différentes permettant à la roue d'être ramenée dans l'encombrement du bâti.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Charrue (1) portée comportant un avant-train (2) et un arrière-train (3), l'arrière-train (3) comportant un bâti (6) équipé de corps de labour (7) et d'une roue de régulation (8), ladite roue de régulation (8) étant montée sur ledit bâti (6) au moyen d'un bras de roue (9 ; 9A), ***caractérisée en ce* que** ledit bras de roue (9 ; 9A) comporte des moyens pour déplacer ladite roue de régulation (8) le long dudit bâti (6) et que lesdits moyens sont constitués d'au moins une articulation (15 ; 15A) d'axe sensiblement vertical et d'au moins une bielle (13, 14 ; 13A, 14A).

2. Charrue selon la revendication 1, ***caractérisée en ce* que** lesdits moyens permettent un pivotement vers l'avant de ladite roue de régulation (8) afin d'être disposée sensiblement dans l'encombrement en largeur dudit bâti (6).

3. Charrue selon la revendication 1 ou 2, ***caractérisée en ce* que** ladite roue de régulation (8) passe d'une position normale de travail à une position non-débordante de travail, et inversement par pivotement autour d'au moins une desdites articulations supplémentaires (15 ; 15A).

4. Charrue selon l'une quelconque des revendications 1 à 3, ***caractérisé en ce* que** dans chacune des positions de travail, ladite roue de régulation (8) est immobilisée par rapport audit bâti (6).

5. Charrue selon l'une quelconque des revendications 1 à 4, ***caractérisée en ce* que** le passage de la position normale de travail à la position non-débordante de la roue de régulation (8), et inversement est pilotable depuis le tracteur.

6. Charrue selon l'une quelconque des revendications 1 à 5, ***caractérisée en ce* que** ledit bras de roue (9 ; 9A) est composé d'une première bielle (13 ; 13A) et d'une deuxième bielle (14 ; 14A).

7. Charrue selon la revendication 6, ***caractérisée en ce* que** ledit bras de roue (9) présente quatre articulations supplémentaires (15, 16, 17, 18), ladite première bielle (13) et ladite deuxième bielle (14) présentant une articulation respective (15, 16, 17, 18) à chacune de leurs extrémités, lesdites articulations supplémentaires (15, 16, 17, 18) définissant un quadrilatère.

8. Charrue selon la revendication 6, ***caractérisée en ce* que** le bras de roue (9A) présente une seule articulation supplémentaire (15A), ladite première bielle (13A) est reliée à ladite deuxième bielle (14A) au moyen de ladite articulation supplémentaire (15A).

9. Charrue selon la revendication 8, ***caractérisée en ce* que** dans la position non-débordante, ladite roue de régulation (8) s'étend sensiblement à l'avant dudit bras de roue (9A) compte tenu de la direction d'avance (A).

## Patentansprüche

1. Anbaupflug (1), der ein Vordergestell (2) und ein Hintergestell (3) aufweist, wobei das Hintergestell (3) ein mit Pflugkörpern (7) und einem Regelungsrad (8) ausgestattetes Gestell (6) aufweist, wobei das Regelungsrad (8) mittels eines Radarms (9; 9A) auf dem Gestell (6) montiert ist, ***dadurch gekennzeichnet,* dass** der Radarm (9; 9A) Mittel aufweist, um das Regelungsrad (8) entlang des Gestells (6) zu verlagern und dass die Mittel von mindestens einem Gelenk (15; 15A) mit einer im Wesentlichen vertikalen Achse und mindestens einem Zwischenglied (13, 14; 13A, 14A) gebildet sind.

2. Pflug nach Anspruch 1, ***dadurch gekennzeichnet,* dass** die Mittel ein Schwenken des Regelungsrads (8) nach vorn erlauben, so dass es im Wesentlichen im Breitenplatzbedarf des Gestells (6) angeordnet ist.

3. Pflug nach Anspruch 1 oder 2, ***dadurch gekennzeichnet,* dass** das Regelungsrad (8) durch Schwenken um mindestens eines der zusätzlichen Gelenke (15; 15A) aus einer normalen Arbeitsstellung in eine nicht überschreitende Arbeitsstellung und umgekehrt wechselt.

4. Pflug nach irgend einem der Ansprüche 1 bis 3, ***dadurch gekennzeichnet,* dass** das Regelungsrad (8) in jeder der Arbeitsstellungen im Verhältnis zum Gestell (6) immobilisiert ist.

5. Pflug nach irgend einem der Ansprüche 1 bis 4, ***dadurch gekennzeichnet,* dass** der Übergang aus der normalen Arbeitsstellung in die nicht überschreitende Stellung des Regelungsrads (8) und umgekehrt vom Schlepper aus steuerbar ist.

6. Pflug nach irgend einem der Ansprüche 1 bis 5, ***dadurch gekennzeichnet,* dass** sich der Radarm (9; 9A) aus einem ersten Zwischenglied (13; 13A) und einem zweiten Zwischenglied (14; 14A) zusammensetzt.

7. Pflug nach Anspruch 6, ***dadurch gekennzeichnet,* dass** der Radarm (9) vier zusätzliche Gelenke (15, 16, 17, 18) aufweist, wobei das erste Zwischenglied (13) und das zweite Zwischenglied (14) an jedem ihrer Enden ein jeweiliges Gelenk (15, 16, 17, 18) aufweisen, wobei die zusätzlichen Gelenke (15, 16, 17, 18) ein Viereck definieren.

8. Pflug nach Anspruch 6, ***dadurch gekennzeichnet,* dass** der Radarm (9A) ein einziges zusätzliches Gelenk (15A) aufweist, wobei das erste Zwischenglied (13A) mit dem zweiten Zwischenglied (14A) mittels des zusätzlichen Gelenks (15A) verbunden ist.

9. Pflug nach Anspruch 8, ***dadurch gekennzeichnet,* dass** sich das Regelungsrad (8) in der nicht überschreitenden Stellung im Hinblick auf die Vorschubrichtung (A) im Wesentlichen vor dem Radarm (9A) erstreckt.

## Claims

1. Mounted plough (1) comprising a fore-carriage (2) and a hind-carriage (3), the hind-carriage (3) including a frame (6) equipped with plough bodies (7) and an adjustment wheel (8), the said adjustment wheel (8) being mounted on the said frame (6) using a wheel arm (9; 9A), ***characterized in* that** the said wheel arm (9; 9A) includes means for moving the said adjustment wheel (8) along the said frame (6) and the said means are made up of at least one articulation (15; 15A) with a substantially vertical axis and at least one connecting rod (13, 14; 13A, 14A).

2. Plough according to claim 1, ***characterized in* that** the said means allow forward pivoting of the adjustment wheel (8) so as to be positioned substantially in the width of the said frame (6).

3. Plough according to claim 1 or 2, ***characterized in* that** the said adjustment wheel (8) goes from a normal work position to a non-protruding work position, and vice versa, by pivoting around at least one of the said additional articulations (15; 15A).

4. Plough according to any one of claims 1 to 3, ***characterized in* that** in each of the work positions, the said adjustment wheel (8) is immobilized relative to the said frame (6).

5. Plough according to any one of claims 1 to 4, ***characterized in* that** the transition from the normal work position to the non-protruding position of the adjustment wheel (8), and vice versa, can be controlled from the tractor.

6. Plough according to any one of claims 1 to 5, ***characterized in* that** the said wheel arm (9; 9A) is made up of a first connecting rod (13; 13A) and a second connecting rod (14; 14A).

7. Plough according to claim 6, ***characterized in* that** the said wheel arm (9) has four additional articulations (15, 16, 17, 18), the said first connecting rod (13) and the said second connecting rod (14) having a respective articulation (15, 16, 17, 18) at each of their ends, the said additional articulations (15, 16, 17, 18) forming a quadrilateral.

8. Plough according to claim 6, ***characterized in* that** the wheel arm (9A) has a single additional articulation (15A), the said first connecting rod (13A) is connected to the said second connecting rod (14A) using the said additional articulation (15A).

9. Plough according to claim 8, ***characterized in* that** in the non-protruding position, the said adjustment wheel (8) extends substantially in front of the said wheel arm (9A) with respect to the direction of advance (A).
